# EUROPÄISCHE PATENTSCHRIFT

(11) **EP 2 159 461 B1**
(45) Veröffentlichungstag und Bekanntmachung des Hinweises auf die Patenterteilung: **30.04.2014**
(21) Anmeldenummer: 09168347.4
(22) Anmeldetag: 21.08.2009
(51) Int. Cl.: B60G 17/052, F16K 31/524

(54) **Anlage zum Heben und Senken eines Fahrzeugaufbaus**
Assembly for lifting and lowering a vehicle structure
Installation de levage et d'abaissement d'une structure de véhicule

(30) Priorität: 26.08.2008 DE 102008039754
(43) Veröffentlichungstag der Anmeldung: 03.03.2010
(73) Patentinhaber: Haldex Brake Products GmbH, 69123 Heidelberg (DE)
(72) Erfinder: Sulzyc, Georg, 68305 Mannheim (DE)
(74) Vertreter: REHBERG HÜPPE + PARTNER

(56) Entgegenhaltungen:
- DE-A1- 2 028 139
- DE-A1-102006 017 890
- DE-A1-102007 045 012
- DE-B3-102005 017 590
- GB-A- 1 333 105
- US-A- 3 818 926

## Beschreibung

### TECHNISCHES GEBIET DER ERFINDUNG

Die Erfindung betrifft eine Anlage zum Heben und Senken eines Fahrzeugaufbaus eines luftgefederten Kraftfahrzeugs mit einem Hebe-Senk-Ventil.

### STAND DER TECHNIK

Gattungsgemäße Anlagen dienen zum Heben und Senken eines Fahrzeugaufbaus eines luftgefederten Kraftfahrzeugs mit einem manuell betätigbaren Hebe-Senk-Ventil. Ein derartiges Hebe-Senk-Ventil besitzt üblicherweise unterschiedliche Stellungen, insbesondere
- eine Stellung FAHRT, die vorzugsweise automatisiert eingenommen wird (sogenannte Reset-to-Ride-Funktion), wenn sich das Kraftfahrzeug bewegt, wobei in der Stellung FAHRT beispielsweise ein Niveauregelventil zur dynamischen Anpassung des Druckluftzustands von Federbälgen der Luftfederung wirksam werden kann,
- eine Stellung STOP, die automatisiert oder manuell betätigt eingenommen wird, wenn das Kraftfahrzeug ruht oder geparkt ist, wobei vorzugsweise in der Stellung STOP der Druckluftzustand der Federbälge der Luftfederung nicht gezielt durch eine Be- oder Entlüftung verändert wird oder unabhängig von einem Beladungszustand des Kraftfahrzeugs ein konstantes Niveau der Luftfederbälge eingeregelt wird,
- eine Stellung HEBEN, in welcher über eine manuelle Betätigung des Hebe-Senk-Ventils der Fahrzeugaufbau durch zusätzliche Belüftung der Federbälge angehoben wird sowie
- eine Stellung SENKEN, in welcher der Fahrzeugaufbau durch Entlüftung von Federbälgen infolge manueller Betätigung abgesenkt wird.

Gemäß DE-PS 26 23 235 besitzt ein Hebe-Senk-Ventil einen in fünf Stellungen verschwenkbaren Hebel, welcher sukzessive aufeinander folgende Schwenkstellungen HEBEN, STOP, FAHRT, STOP, SENKEN besitzt. Die Schwenkbewegung des Schwenkhebels ist gekoppelt mit der Verdrehung einer Schaltwelle, die nockenartige Steuerscheiben besitzt, an deren Mantelflächen über eine Ventilfeder Ventilkörper gepresst werden, so dass nach Maßgabe der Verdrehung der Schaltwelle den Ventilkörpern zugeordnete Ventile geöffnet und geschlossen werden können. Das Hebe-Senk-Ventil besitzt
- einen mit einem Vorratsbehälter verbundenen Versorgungs-Anschluss,
- einen mit einem Niveauregelventil verbundenen Niveauregelventil-Anschluss,
- einen Entlüftungs-Anschluss sowie
- einen zu mindestens einem Luftfederbalg führenden Luftfederbalg-Anschluss,
die über die Ventile derart miteinander verbunden sind, dass
- in der Stellung FAHRT der Luftfederbalg-Anschluss mit dem Niveauregelventil-Anschluss verbunden ist,
- in der Stellung STOP der Luftfederbalg-Anschluss abgesperrt ist,
- in der Stellung HEBEN der Versorgungs-Anschluss mit dem Luftfederbalg-Anschluss verbunden ist und
- in der Stellung SENKEN der Luftfederbalg-Anschluss mit dem Entlüftungs-Anschluss
verbunden ist. Anschläge und Rastierungen für die Schwenkbewegung des Schwenkhebels sind durch Einsatz eines federbelasteten Schnappteils gebildet, welches mit einer wellenartigen Gegenkontur zusammenwirkt.

Auch DE 33 44 022 C2 offenbart ein Hebe-Senk-Ventil. Dieses wird elektrisch betätigt über eine in einem Fahrerhaus des Kraftfahrzeugs angeordnete Betätigungseinrichtung. Diese Betätigungseinrichtung kann in die sukzessive aufeinander folgenden Schwenkstellungen STOP, SENKEN, FAHREN, HEBEN, STOP verschwenkt werden. Die Druckschrift offenbart den kumulativen Einsatz einer zweiten Betätigungseinrichtung mit elektrischem Ausgangssignal, welche in die Stellungen SENKEN, STOP, HEBEN verschwenkt werden kann. Nach Maßgabe der elektrischen Ausgangssignale der Betätigungseinrichtungen werden zwei Magnetventile betätigt, die eine axiale Verschiebung eines Schieberventils herbeiführen, über welches die erforderlichen Leitungsverbindungen zwischen einer Druckluftversorgung, einem Niveauregelventil, einer Entlüftung und Luftfederbälgen geschaffen werden. Eine entsprechende aus dem Fahrerhaus des Kraftfahrzeugs fernbetätigte Anlage offenbart DE 34 45 579 C1, wobei hier Stellungen HEBEN, STOP, FAHREN, STOP, SENKEN in der genannten Reihenfolge in Schwenkrichtung eines Betätigungsorgans hintereinander liegend angeordnet sind.

Ein weiteres Hebe-Senk-Ventil ist aus DE-OS 25 10 954 bekannt. Dieses besitzt zwei Bedienungselemente: Das erste Bedienungselement ist als manuell verschwenkbarer Hebel ausgebildet, der aus den von einer Neutralstellung (STOP) in die Stellungen HEBEN und SENKEN verschwenkt werden kann. Ein mit dieser Schwenkbewegung gekoppeltes Steuerelement, welches ein Einlass- und ein Auslassventil betätigt, wird von einer Federanordnung in der Stellung STOP gehalten und kann über das Bedienungselement durch Aufbringung manueller Kräfte unter Überwindung der Federkraft der Federanordnung in die Stellungen HEBEN und SENKEN verschwenkt werden. Die Federn bewirken ein selbsttätiges Rückschwenken aus den Stellungen HEBEN und SENKEN in die Stellung STOP. Zum Umschalten zwischen den Stellungen FAHRT und STOP ist ein weiteres Betätigungselement vorgesehen. Dieses besitzt eine Schaltwelle, die über einen pneumatisch beaufschlagten Steuerkolben verschwenkbar ist. Der zugehörige Ventilkörper ist als Schieber ausgeführt und auf einer Rückführfeder abgestützt, die den Ventilschieber und die Schaltwelle in die Stellung STOP zurückführt, wenn über ein im Fahrerhaus angeordnetes Steuerventil die Steuerkammer des Steuerkolbens entlüftet ist. Während der Fahrt wird das Steuerventil in eine solche Stellung gebracht, dass Druckluft auf dem Steuerkolben steht und die Stellung FAHRT über die Schaltwelle angesteuert wird. Soll nach Beendigung der Fahrt ein Containerbetrieb ermöglicht werden, wird das Steuerventil umgeschaltet und die Steuerkammer entlüftet.

DE 41 20 824 C1 offenbart ein Hebe-Senk-Ventil, welches lediglich mit einem Bedienungselement ausgestattet ist, welches durch axiale Verschiebung zwischen den Stellungen FAHRT und STOP verschieblich ist, während ausgehend von der Stellung STOP eine Verschwenkung in die Stellungen HEBEN und SENKEN möglich ist. Eine Schaltwelle mit entsprechenden Freiheitsgraden wird durch Druckbeaufschlagung eines Steuerkolbens über eine Steuereinrichtung entgegen einer Feder aus der Stellung STOP in die Stellung FAHRT verschoben. Hierdurch wird eine als Reset-To-Ride-Funktion gewährleistet, über die das Bedienungselement mit der zugeordneten Schaltwelle automatisch aus der Stellung STOP in die Stellung FAHRT überführt wird, wenn eine manuelle Überführung des Bedienungselements vor der Fahrtaufnahme des Kraftfahrzeugs vergessen wurde. Auf diese Weise kann insbesondere die Wirkung eines Niveauregelventils während der Fahrt garantiert werden. Ergänzend schlägt die Druckschrift vor, in der Stellung FAHRT die Schaltwelle durch eine Verriegelungseinrichtung an einer Drehung zu hindern, wobei die Verriegelungseinrichtung mit einem die Schaltwelle radial durchsetzenden Bolzen ausgebildet ist, der in der Stellung FAHRT zwischen Umfangsanschlägen gegen ein Verdrehen gesichert ist.

DE 42 02 729 C2 schlägt vor, für eine "Reset-To-Ride"-Funktion ein Signal einer ABS-Anlage zu nutzen, um einen beginnenden Fahrzustand des Kraftfahrzeugs zu erkennen. Hieraus wird ein Steuersignal für ein Magnetventil abgeleitet, welches mit der Fahrtaufnahme die Druckbeaufschlagung eines Steuerkolbens und damit eine Überführung einer Schaltwelle in die Stellung FAHRT initiiert.

DE 199 13 380 C1 offenbart eine verschwenkbare und axial unter Entlastung einer Feder aus einer Stellung STOP in eine Stellung FAHRT verschiebliche Schaltwelle, wobei eine Sicherung der Schaltwelle sowohl in der Stellung FAHRT als auch STOP durch eine Rastkugel erfolgt, die in axial beabstandete, den Stellungen FAHRT und STOP zugeordnete Rastnuten eingreift. Die Rastkugel ist radial in Richtung der Schaltwelle beaufschlagt durch eine Druckfeder, die an einem Hilfskolben abgestützt ist. Eine auf den Hilfskolben einwirkende Druckkammer kann nach Maßgabe eines Magnetventils selektiv druckbeaufschlagt oder entlüftet werden, so dass letztlich über das Magnetventil und die Druckverhältnisse in der Druckkammer die wirkende Rastkraft veränderbar ist. Für druckbeaufschlagte Druckkammer ist die Rastkraft derart dimensioniert, dass die auf die Schaltwelle in axialer Richtung wirkende Feder keine ausreichende Federkraft besitzt, um die Schaltwelle unter Überwindung der Rastkraft aus der Stellung STOP in die Stellung FAHRT zu überführen. Mit Entlüftung der Druckkammer über das Magnetventil verringert sich die Rastkraft derart, dass die Kraft der Feder ausreichend ist, um die Schaltwelle aus der Stellung FAHRT in die Stellung STOP zu verschieben.

Während für die vorgenannten, aus dem Stand der Technik bekannten Ausführungsformen Federelemente, insbesondere Torsionsfedern, ausschließlich für die Rückführung einer Schaltwelle aus einer Stellung HEBEN und/oder SENKEN in die Stellung STOP verantwortlich waren, schlägt DE 101 29 143 C1 vor, mit der Schaltwelle zusammenwirkende, über Ventilfedern an die Schaltwelle angepresste Ventilkörper exzentrisch zur Längsachse der Schaltwelle anzuordnen, so dass in einer Stellung HEBEN oder SENKEN die Ventilfeder ein Torsionsmoment auf die Schaltwelle ausübt derart, dass die Ventilfeder verantwortlich ist für eine Rückführung der Schaltwelle aus einer Stellung HEBEN oder SENKEN in die Stellung STOP, wenn manuelle Betätigungskräfte nicht mehr vorhanden sind.

Schließlich schlägt DE 10 2006 017 890 A1 eine Schaltwelle vor, welche axial verschieblich ist zwischen den Stellungen FAHRT und STOP. Ausgehend von der Stellung STOP wird zur Herbeiführung einer Stellung HEBEN (SENKEN) die Schaltwelle zunächst verdreht und dann nochmals axial verschoben. Eine automatische Rückführung aus einer Stellung HEBEN (SENKEN) ist möglich durch Druckbeaufschlagung einer Steuerfläche der Schaltwelle, während für eine Rückdrehung in die Stellung STOP separat hierfür vorgesehene Torsionsfedern oder Ventilfedern verantwortlich sein können. Aus der Stellung STOP kann, ebenfalls über eine Druckbeaufschlagung einer oder der Steuerfläche, die Stellung FAHRT automatisiert eingenommen werden für eine Reset-to-Ride-Funktion. In der Stellung HEBEN und/oder SENKEN ist die Schaltwelle über eine Rastiereinheit sicherbar, welche als federbeaufschlagte Rastkugel ausgebildet ist. Eine Verringerung der Rastierkraft der Rastkugel kann herbeigeführt werden durch gezielte Ansteuerung eines Magnetventils, über welches eine Druckkammer druckbeaufschlagbar ist, die eine Kraft auf die Rastkugel oder einen die Rastkugel abstützenden Körper oder Federfußpunkt erzeugt, die der Federkraft der Rastierfeder entgegengerichtet ist. Die Rastiereinheit kann manuell durch den Benutzer oder automatisiert gelöst werden. Für das Erreichen der Stellungen HEBEN und SENKEN tritt ein radialer Fortsatz in eine in axialer Richtung der Schaltwelle orientierte Nut eines Gehäuses ein, so dass ein Formschluss zwischen Fortsatz und Nut eine Verdrehung in der Stellung HEBEN oder SENKEN vermeidet. Eine derartige Sicherung in einer diskreten Axialstellung wird in der Druckschrift als "Kulissenführung" bezeichnet.

DE 10 2006 006 439 A1 offenbart eine Ventileinrichtung zur manuellen Veränderung der Niveaulage eines luftgefederten Fahrzeuges mit einem in einer nutartigen Kulisse konstanter Tiefe geführten Kulissenfinder. Bewegungen des Kulissenfingers werden durch seitliche Begrenzungen der Kulisse, die mit der Mantelfläche des Kulissenfingers in Wechselwirkung treten, geführt. Die seitlichen Begrenzungen besitzen Ausbuchtungen, in denen eine Verriegelung des Kulissenfingers erfolgen kann. Eine Entriegelung zur Herbeiführung einer Reset-to-Ride-Funktion erfolgt nach Maßgabe eines elektrischen oder pneumatischen Signals, nach dessen Maßnahme der Kulissenfinger in Richtung seiner Längsachse bewegt wird, so dass dieser außer Eingriff mit der Kulisse gebracht wird.

### AUFGABE DER ERFINDUNG

Der Erfindung liegt die Aufgabe zugrunde, eine Anlage zum Heben und Senken eines Fahrzeugaufbaus eines luftgefederten Kraftfahrzeugs mit einem Hebe-Senk-Ventil vorzuschlagen, welche hinsichtlich
- der Sicherung von mindestens einer Stellung des Hebe-Senk-Ventils,
- dem Lösen einer derart gesicherten Stellung und
- der Führung der Bewegungen einer Schaltwelle des Hebe-Senk-Ventils
verbessert ist.

### LÖSUNG

Die Aufgabe der Erfindung wird erfindungsgemäß mit den Merkmalen des unabhängigen Patentanspruchs 1 gelöst. Weitere Ausgestaltungen der erfindungsgemäßen Lösung ergeben sich gemäß den Merkmalen der abhängigen Patentansprüche 2 bis 13.

### BESCHREIBUNG DER ERFINDUNG

Der vorliegenden Erfindung liegt zunächst die Erkenntnis zugrunde, dass für den eingangs erläuterten Stand der Technik Sicherungselemente vorgesehen sind, über die beispielsweise eine Axialstellung eines als Schaltwelle ausgebildeten Schaltwelle sicherbar ist, vgl. DE 199 13 380 C1 oder DE 10 2006 017 890 A1, oder eine Verdrehung der Schaltwelle über eine Verbindung zwischen einem Fortsatz der Schaltwelle und einer Nut des Gehäuses sicherbar ist, vgl. den in DE 101 29 143 C1 beschriebenen Fortsatz, der als Flügel bezeichnet ist, oder der Bolzen, der eine Drehsicherung gegenüber Anschlägen vornimmt gemäß DE 41 20 824 C1.

Erfindungsgemäß wird erstmals eine Kulissenführung eingesetzt, bei der ein Kulissenfinger in eine Kulisse des Schaltwelle eingreift. Durch diese Kulissenführung ist eine Führung der Bewegung des Schaltwelle zumindest auf einem Teilweg, vorzugsweise auf den gesamten möglichen Wegen, zwischen den Stellungen FAHRT, STOP, HEBEN und SENKEN möglich. Hierbei kann eine Führung eine Führung während einer axialen Bewegung und/oder während einer Verschwenkung bedeuten und/oder einer Vorgabe einer Zwischen- oder Endlage der Schaltwelle des Hebe-Senk-Ventils dienen.

Allerdings dient das Zusammenwirken von Kulissenfinger und Kulisse erfindungsgemäß nicht lediglich diesem Führungszweck. Vielmehr ist die geschaffene Kulissenführung multifunktional ausgebildet: Der Boden oder ein "Grund" der Kulisse besitzt variierende Abstände von der Längsachse der Schaltwelle. Hierbei kann der Abstand für durch die Kulissenführung vorgegebene Bewegungen beliebig variieren, beispielsweise kurvenförmig, rampenartig oder sprungartig, wobei in Teilbereichen der Bewegung ein konstanter Abstand des Bodens von der Längsachse gegeben sein kann. Durch die variierenden Abstände des Bodens der Kulisse von der Längsachse der Schaltwelle ist eine Rast-, Verriegelungs- oder Sicherungskraft für die Schaltwelle in mindestens einer der Stellungen FAHRT, STOP, HEBEN und/oder SENKEN herbeiführbar. Die Rast-, Verriegelungs- oder Sicherungskraft wird dadurch erzeugt, dass für eine unter Umständen auch nur geringfügige Bewegung aus der Stellung FAHRT, STOP, HEBEN oder SENKEN ein Abstand des Bodens der Kulisse von der Längsachse der Schaltwelle vergrößert wird, so dass eine Bewegung des Kulissenfingers nach außen erforderlich ist.

Im Sinne der vorliegenden Erfindung wird unter einer "*Rastkraft*" eine von der Kulissenführung erzeugte Kraft verstanden, die eine eingenommene Stellung sichert, wobei für hinreichend große Kräfte, die in Richtung einer Bewegung aus der gesicherten Stellung gerichtet sind, die über die Rastkraft gesicherte Stellung verlassen werden kann. Hingegen beschreibt eine "*Verriegelungskraft*" eine über die Kulissenführung herbeigeführte Kraft, die die Stellung unabhängig von der Größe einer Kraft, die in Richtung einer Bewegung aus der gesicherten Stellung orientiert ist, sichert, so dass die gesicherte Stellung nur unter separater Betätigung eines Verriegelungselements oder plastischer Verformung der beteiligten Bauelemente verlassen werden kann. Eine "*Sicherungskraft*" bezeichnet eine allgemeine Kraft zur Sicherung einer eingenommenen Stellung.

Um eine verrastete, verriegelte oder gesicherte Stellung verlassen zu können, schlägt die Erfindung vor, dass eine Betätigungseinrichtung vorgesehen ist, über die eine Veränderung der Anpresskraft des Kulissenfingers an den Boden der Kulisse und/oder eine Verschiebung des Kulissenfingers in Richtung des Bodens und/oder von diesem weg herbeiführbar ist. Somit kann durch Betätigung der Betätigungseinrichtung eine existierende Rast-, Verriegelungs- oder Sicherungskraft verändert werden. Eine derartige Veränderung kann in einer Verringerung, Vergrößerung, Aufhebung oder Herbeiführung einer Rast-, Verriegelungs- oder Sicherungskraft bestehen. Die genannte Betätigungseinrichtung kann manuell durch einen Benutzer der erfindungsgemäßen Anlage und/oder automatisch durch geeignete Steuereinrichtungen betätigt werden.

Durch die erfindungsgemäße Ausgestaltung ist eine multifunktionale Kulissenführung möglich, die neben der Führung der Bewegungen der Schaltwelle auch einer Sicherung mindestens einer eingenommenen Stellung der Schaltwelle dient. Hierdurch ist ein kompakter Aufbau der Anlage und des Hebe-Senk-Ventils ermöglicht. Andererseits kann über die erfindungsgemäße Kulissenführung eine einfache, aber exakte Abstimmung der Führung der Bewegungen der Schaltwelle und der gesicherten Stellung(en) erfolgen. Hingegen erfordert eine separate Ausführung der Führungseinrichtung und Sicherungseinrichtung, wie diese aus dem Stand der Technik bekannt sind, zusätzliche Abstimmmaßnahmen für die Lage und Ausrichtung von Sicherungseinrichtung und Führungseinrichtung.

Die zuvor dargelegte Erfindung kann nicht nur Einsatz finden für eine Schaltwelle, welche (auch) in unterschiedliche Stellungen verschwenkbar ist. Vielmehr kann die Erfindung auch eingesetzt werden für ein beliebiges Schaltorgan, welches bspw. lediglich verschieblich ist zwischen unterschiedlichen Stellungen.

Für einen weiteren Vorschlag der Erfindung ist die Betätigungseinrichtung druckluftgesteuert. Beispielsweise kann der Kulissenfinger mit einem Stellkolben gekoppelt sein, auf welchen ein Druck einer Steuerkammer wirkt, so dass je nach Druck in der Druckkammer ein Kulissenfinger verändert in Richtung des Bodens der Kulisse beaufschlagt werden kann, so dass Ausgestaltungen analog zu den Druckschriften DE 199 13 380 C1 und DE 10 2006 017 890 A1 einsetzbar sind, für die allerdings die Rastkugel durch einen Kulissenfinger ersetzt sind und das Schaltorgan mit einer Kulisse ausgestattet wird. Eine Druckluftsteuerung für die genannte Druckkammer kann über beliebige pneumatische Elemente erfolgen, wobei auch der Einsatz eines Magnetventils zur Be- und Entlüftung der Druckkammer möglich ist, welches über eine Steuereinrichtung elektrisch angesteuert wird. Ebenfalls möglich ist der Einsatz eines elektrisch über ein elektromagnetisches Vorsteuerventil angesteuerten pneumatischen Ventils oder eines rein pneumatisch gesteuerten Ventils.

Entsprechend einem anderen Vorschlag der Erfindung ist die Betätigungseinrichtung als elektromagnetische Betätigungseinrichtung ausgebildet. Hierbei kann die elektromagnetische Betätigungseinrichtung auf einen Anker einwirken, der mit dem Kulissenfinger gekoppelt ist, beispielsweise einstückig mit diesem ausgebildet ist, mit diesem starr verbunden ist oder über eine getriebliche Verbindung verbunden ist. Je nach elektrischer Beaufschlagung der elektromagnetischen Betätigungseinrichtung können damit die Kraftverhältnisse und Führungsverhältnisse für das Schaltorgan beeinflusst werden, so dass eine Steuerung der Führung sowie eine Veränderung der Sicherungswirkung einer eingenommenen Stellung des Schaltorgans über eine elektrische Steuereinrichtung ermöglicht ist.

Vorzugsweise erfolgt durch die Kulissenführung mittels variierender Abstände des Bodens der Kulisse von der Längsachse des Schaltorgans die Herbeiführung einer Rast-, Verriegelungs-oder Sicherungskraft für das Schaltorgan in der Stellung HEBEN und/oder SENKEN. Dieser Ausgestaltung liegt die Erkenntnis zugrunde, dass ein Hebe-Vorgang oder Senk-Vorgang unter Umständen länger dauern kann, wobei der Benutzer für aus dem Stand der Technik bekannte Ausführungsformen das Schaltorgan dauerhaft betätigen muss. Erfindungsgemäß kann hingegen der Benutzer einmal die Stellung HEBEN oder SENKEN herbeiführen, woran anschließend eine automatische Sicherung in der gewählten Stellung erfolgt. Ein Ende des Hebe- oder Senkvorgangs kann von dem Benutzer erkannt werden, was dieser dann umsetzen kann durch manuelle Verursachung eines Verlassens der Stellung HEBEN oder SENKEN. Ein Ende eines Hebe- oder Senkvorgangs kann aber auch automatisch, beispielsweise durch eine Steuereinheit, erkannt werden. Somit kann erfindungsgemäß die Bedienung der Anlage vereinfacht werden, wobei unter Umständen auch eine Erhöhung der Betriebssicherheit herbeigeführt werden kann, indem ein Ende des Hebe- oder Senk-Vorgangs automatisiert erkannt wird und gewährleistet wird, dass das Schaltorgan nicht nach dem Hebe- oder Senk-Vorgang in der Stellung HEBEN oder SENKEN verbleibt.

Gemäß einer weiteren erfindungsgemäßen Anlage ist - neben den Stellungen HEBEN und/oder SENKEN - auch die Stellung STOP durch variierende Abstände des Bodens der Kulisse von der Längsachse des Schaltorgans gesichert. Damit kann beispielsweise nach dem Ende des Hebe- oder Senk-Vorgangs das Schaltorgan automatisiert in die Stellung STOP zurückkehren, wo über die genannte Sicherung insbesondere vermieden ist, dass sich das Schaltorgan unerwünscht in Richtung der Stellung FAHRT zurückbewegt.

Im Rahmen der Erfindung kann das Schaltorgan in einer gesicherten Stellung mehr als einen Freiheitsgrad aufweisen, beispielsweise in der Stellung STOP einen Freiheitsgrad für eine Axialverschiebung in Richtung einer Stellung FAHRT sowie einen Verdreh-Freiheitsgrad in Richtung der Stellungen HEBEN und SENKEN besitzen. Eine Rast-, Verriegelungs- oder Sicherungskraft kann hierbei in einer über die Kulissenführung gesicherten Stellung lediglich in Richtung eines der genannten Freiheitsgrade erzeugt werden, so dass eine ungesicherte Bewegung in Richtung des anderen Freiheitsgrads noch möglich ist. Ebenfalls denkbar ist, dass die Rast-, Verriegelungs- oder Sicherungskraft in Richtung beider genannter Freiheitsgrade wirkt mit gleichen oder unterschiedlichen Rast-, Verriegelungs- oder Sicherungskräften.

In weiterer Ausgestaltung der erfindungsgemäßen Anlage ist in dieser, insbesondere in dem Hebe-Senk-Ventil, ein Reset-to-Ride-Organ vorgesehen, über welches eine automatische Überführung des Hebe-Senk-Ventils aus der Stellung STOP in die Stellung FAHRT ermöglicht ist. Für die konstruktive Ausgestaltung eines derartigen Reset-to-Ride-Organs mit der genannten Funktion gibt es vielfältige Möglichkeiten, insbesondere die Folgenden:
a) Eine automatische Überführung kann über eine elektromagnetische Betätigungseinrichtung erfolgen, welche je nach elektrischer Beaufschlagung eine elektromagnetische Kraft erzeugt, die aus der Stellung STOP in die Stellung FAHRT gerichtet ist.
b) Ebenfalls möglich ist, dass das Reset-to-Ride-Organ pneumatisch mit einer Druckkammer gemäß den Druckschriften DE 41 20 824 C1 und DE 42 02 729 C2 ausgebildet ist, wobei eine Druckluftbeaufschlagung der Druckkammer beispielsweise über ein Magnetventil elektrisch gesteuert werden kann.
c) Ebenfalls von der Erfindung umfasst ist die Ausgestaltung des Reset-to-Ride-Organs als Druckfeder gemäß DE 199 13 380 C1, über die mit Verringerung oder Entfall einer Rast-, Verriegelungs- oder Sicherungskraft für das Schaltorgan das Schaltorgan aus der Stellung STOP in die Stellung FAHRT überführt wird.

Für eine vorteilhafte Ausgestaltung der Erfindung ist eine Steuereinrichtung vorgesehen, über die das Reset-to-Ride-Organ für eine Überführung des Hebe-Senk-Ventils aus der Stellung STOP in die Stellung FAHRT aktivierbar ist. Für die zuvor aufgelisteten beispielhaften Ausgestaltungen des Reset-to-Ride-Organs a), b) steuert somit die Steuereinrichtung die Druckbeaufschlagung der Druckkammer oder die Aktivierung der elektromagnetischen Betätigungseinrichtung.

Damit mit der Betätigung des Reset-to-Ride-Organs keine unerwünschte Wechselwirkung mit der Kulissenführung auftritt, ist erfindungsgemäß die Aktivierung des Reset-to-Ride-Organs, über die eine Überführung des Hebe-Senk-Ventils aus der Stellung STOP in die Stellung FAHRT erfolgen soll, gekoppelt mit einer Aufhebung der Sicherung des Schaltorgans in der Stellung STOP. Wird die Aufhebung der Sicherung und die Aktivierung des Reset-to-Ride-Organs durch dieselbe Steuereinrichtung vorgenommen, kann eine gute Anpassung dieser beiden Vorgänge mit einer gewünschten zeitlichen Synchronität oder Abfolge gewährleistet werden.

Weitere Aspekte der Erfindung widmen sich der Bestimmung eines geeigneten Zeitpunkts, zu dem für einen eingeleiteten und gesicherten Hebe- oder Senk-Vorgang eine automatische Aufhebung der Sicherung erfolgen soll, also der Hebe- oder Senk-Vorgang automatisch beendet werden soll:
- Für eine mögliche Ausführungsform erfolgt die automatische Aufhebung der Sicherung in Abhängigkeit von einem Zustand mindestens eines Luftfederbalgs. Bei einem derartigen Zustand handelt es sich beispielsweise um den Ein- oder Ausfederzustand des Luftfederbalgs oder die Niveauhöhe des Fahrzeugsaufbaus. Alternativ oder zusätzlich kann es sich bei dem Zustand um einen Druck in dem Federbalg handeln. Beispielsweise kann ein Maximaldruck für den Druck in dem Federbalg vorgegeben sein, unterhab dessen die Betriebssicherheit des Federbalgs gegeben ist. Eine automatische Aufhebung der Sicherung - und damit eine Rückkehr in die Stellung STOP - kann mit Überschreiten dieses Maximaldrucks erfolgen, um Beschädigungen eines Luftfederbalgs zu vermeiden. Andererseits kann auch eine Aufhebung der Sicherung erfolgen, wenn ein minimaler Druck oder eine minimale Höhe des Luftfederbalgs unterschritten wird, wodurch beispielsweise vermieden werden kann, dass insbesondere bei einem Transport des Kraftfahrzeugs auf einem Zug oder einer Fähre der Luftfederbalg "auf Block" geht, was ebenfalls Beschädigungen hervorrufen könnte.
- Ebenfalls möglich ist, dass eine automatische Aufhebung der Sicherung der Stellung HEBEN und/oder SENKEN in Abhängigkeit von einem Druck in einem Vorratsbehälter des Kraftfahrzeugs erfolgt, so dass ein automatischer Abbruch eines Hebe- oder Senk-Vorgangs erfolgen kann, um einen Mindestdruck in einem Vorratsbehälter des Kraftfahrzeugs zu gewährleisten, der für einen Betrieb anderer Aggregate oder der Luftfederung für andere Funktionen erforderlich ist.
- Ebenfalls möglich ist, dass eine automatische Aufhebung der Sicherung der Stellung HEBEN und/oder SENKEN in Abhängigkeit von einem Beladungszustand des Kraftfahrzeugs erfolgt. Beispielsweise kann aus einem anderweitig erkannten Beladungszustand auf eine erforderliche Befüllung des Luftfederbalgs, einen Druck in diesem oder eine Ausfederung des Luftfederbalgs geschlossen werden, woraus wiederum auf ein sinnvolles Ende des Hebe- oder Senk-Vorgangs rückgeschlossen werden kann.
- Ebenfalls möglich ist, dass eine Steuereinrichtung vorgesehen ist, welche in Abhängigkeit von einer Fahrbeginnerkennungseinrichtung eine automatische Aufhebung der Sicherung der Stellung HEBEN, SENKEN und/oder STOP herbeiführt. Bei einer derartigen Fahrbeginnerkennungseinrichtung kann es sich beispielsweise um einen Anlasser für die Brennkraftmaschine des Kraftfahrzeugs, einen Sensor, der ein Öffnen der Tür der Fahrerkabine indiziert, einen Fahrersitzerkennungssensor, einen Gaspedal-oder Drosselklappensensor, einen Feststellbremssensor, einen Fahrgeschwindigkeitssensor, der einen Vergleich einer Schwellgeschwindigkeit durchführt, ein Navigationssystem, welches eine Bewegung erkennt, ein ABS-System mit einer eines ABS-Signals entsprechend DE 42 02 279 C2 oder Ähnliches handeln.

Es versteht sich, dass für die vorgenannten Zwecke eine einzige Steuereinrichtung oder mehrere Steuereinrichtungen, die auch miteinander kommunizieren können, Einsatz finden können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erfindungsgemäße Anlage mit einem manuell betätigbaren Hebe- Senk-Ventil in einer schematischen Darstellung in einer Stellung FAHRT.
- **Fig. 2**: zeigt die Anlage gemäß Fig. 1, wobei sich das Hebe-Senk-Ventil in der Stellung STOP befindet.
- **Fig. 3**: zeigt die Anlage gemäß Fig. 1 und 2, wobei sich das Hebe-Senk-Ventil zwischen der Stellung STOP und einer Stellung HEBEN befindet.
- **Fig. 4**: zeigt die Anlage gemäß Fig. 1 bis 3, wobei sich das Hebe-Senk-Ventil in der Stellung HEBEN befindet.
- **Fig. 5**: zeigt ein Detail einer Anlage gemäß Fig. 1 bis 4 mit einer Kulissenführung mit einem über eine elektromagnetische Betätigungseinrichtung betätigbaren Kulis- senfinger in einer Stellung FAHRT.
- **Fig. 6**: zeigt ein Detail einer alternativen Ausgestaltung einer Anlage gemäß Fig. 1 bis 4 mit einer abweichend ausgebildeten Kulissenführung mit einem über eine elektro- magnetische Betätigungseinrichtung betätigbaren Kulissenfinger in einer Stellung FAHRT.
- **Fig. 7**: das Detail der Anlage entsprechend Fig. 6 mit der Kulissenführung in einer Stellung STOP.
- **Fig. 8**: das Detail der Anlage entsprechend Fig. 6 mit der Kulissenführung in einer Stellung HEBEN.

### FIGURENBESCHREIBUNG

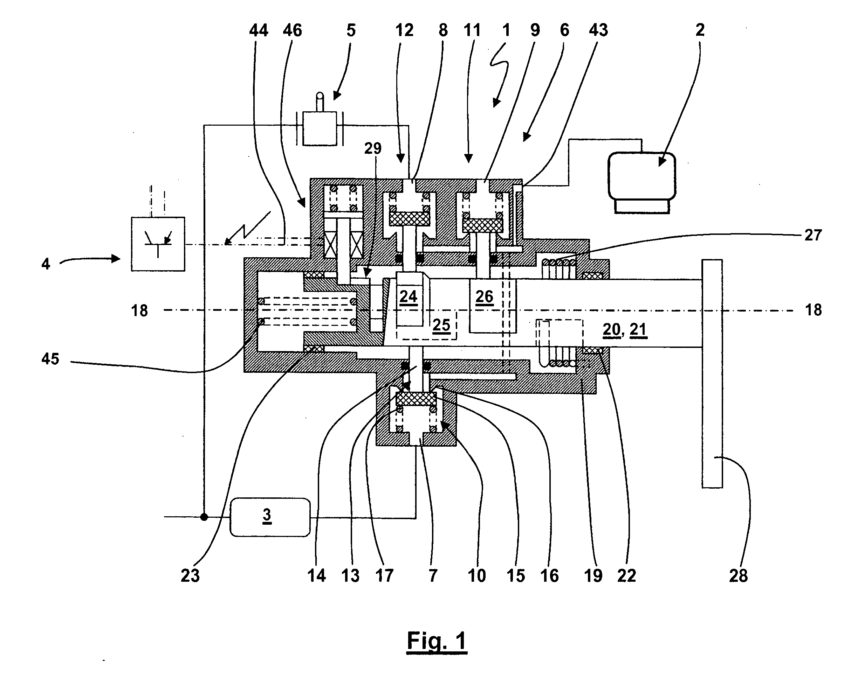

Fig. 1 zeigt eine Anlage 1, die zum Heben und Senken eines Fahrzeugaufbaus eines über Luftfederbälge 2 gefederten Kraftfahrzeugs Einsatz findet. Die Anlage 1 wird aus einer nicht weiter dargestellten Druckluftversorgung und mit einem Vorratsbehälter 3 mit Druckluft versorgt. Weiterhin besitzt die Anlage 1 eine Steuereinrichtung 4, ein Niveauregelventil 5 sowie ein Hebe-Senk-Ventil 6.

Das Hebe-Senk-Ventil 6 verfügt über einen Versorgungs-Anschluss 7, der mit dem Vorratsbehälter 3 und einer nicht dargestellten Druckluftversorgungseinrichtung verbunden ist. Weiterhin besitzt das Hebe-Senk-Ventil 6 einen Niveauregel-Anschluss 8, der über das Niveauregelventil 5 mit dem Vorratsbehälter 3 und der nicht dargestellten Druckluftversorgungseinrichtung verbunden ist. Außerdem besitzt das Hebe-Senk-Ventil 6 einen Entlüftungs-Anschluss 9, der mit der Atmosphäre verbunden ist, sowie einen Luftfederbalg-Anschluss 43, der mit einem Luftfederbalg 2 oder mehreren Luftfederbälgen, beispielsweise einer Achse, verbunden ist.

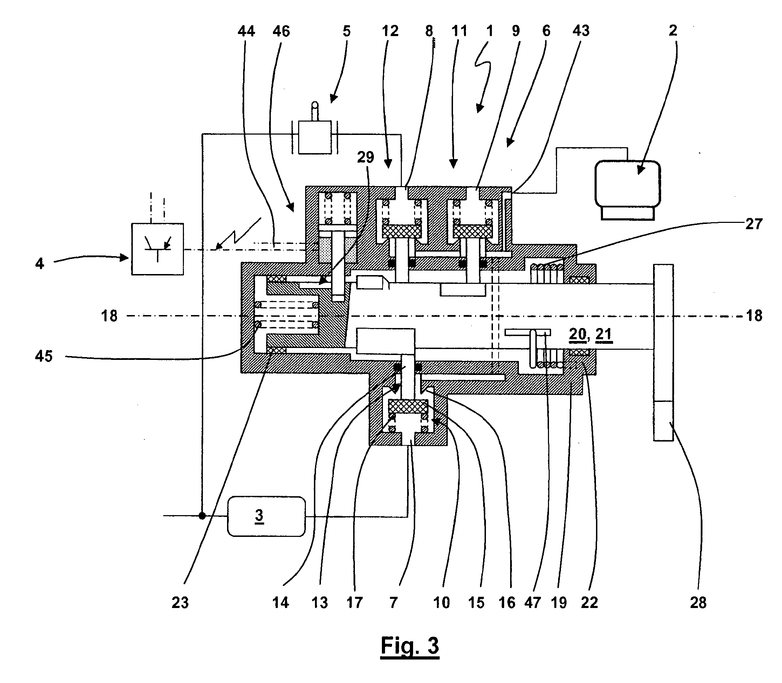

Das Hebe-Senk-Ventil verfügt über ein Hebe-Ventil 10, ein Senk-Ventil 11 sowie ein Fahrt-Ventil 12. Für das dargestellte Ausführungsbeispiel sind die Ventile 10, 12 ungefähr in derselben Axialebene des Hebe-Senk-Ventils 6 angeordnet, während das Senk-Ventil 11 axial versetzt zu dieser Axialebene angeordnet ist. Selbstverständlich sind auch anderweitige Gestaltungen bezüglich der Ebenen für die Anordnung der Ventil 10 bis 12 möglich. Die Ventile 10, 11, 12 sind jeweils mit einem Ventilkörper 13 ausgebildet, der mit einem Ventilstößel 14 sowie einem Verschlusskörper 15 ausgebildet ist. Weiterhin besitzen die Ventile 10 bis 12 jeweils einen Ventilsitz 16, an welchem in einer Schließstellung des Ventils 10, 11, 12 der Verschlusskörper 15 unter Abdichtung zur Anlage kommt. Die Verschlusskörper 15 sind jeweils in der Schließstellung über eine Ventilfeder 17 gegen den Ventilsitz 16 gepresst zur Erzeugung einer hinreichenden Dichtwirkung. Für eine Herbeiführung einer Öffnungs- oder Schließstellung der Ventile 10, 11, 12 sind die Ventilkörper 13 jeweils in eine Richtung radial zu einer Längsachse 18-18 verschieblich geführt. (In den Figuren 1 bis 4 sind die Bezugszeichen 13 bis 17 lediglich exemplarisch bei dem Hebe-Ventil 10 eingezeichnet, wobei die Ventile 11, 12 entsprechend ausgebildet sind.)

Unter ergänzender Nutzung der aus Fig. 1 ersichtlichen, schematisch dargestellten Verbindungskanäle verbindet das Hebe-Ventil 10 in seiner Öffnungsstellung den Versorgungs-Anschluss 7 mit dem Luftfederbalg-Anschluss 43. Mit geschlossenen Ventilen 11, 12 ist eine Stellung HEBEN des Hebe-Senk-Ventils 6 gegeben.

Entsprechend sind für eine Stellung SENKEN die Ventile 10, 12 geschlossen, während das Senk-Ventil 11 geöffnet ist und den Luftfederbalg-Anschluss 43 mit dem Entlüftungs-Anschluss 9 verbindet.

Schließlich sind in der Stellung FAHRT die Ventile 10, 11 geschlossen, während das Fahrt-Ventil 12 geöffnet ist, wodurch eine Verbindung des Niveauregel-Anschlusses 8 mit dem Luftfederbalg-Anschluss 43 gegeben ist.

In einem Gehäuse 19 des Hebe-Senk-Ventils 6 ist ein Betätigungsorgan 20 beweglich geführt. Für das dargestellte Ausführungsbeispiel ist das Betätigungsorgan als Schaltwelle 21 ausgebildet, die über geeignete Lager-, Führungs- und Dichteinheiten 22, 23 verschieblich in Richtung der Längsachse 18-18 sowie verdrehbar um die Längsachse 18-18 geführt ist. Die Schaltwelle 21 besitzt ein aus dem Gehäuse 19 auskragendes Betätigungsorgan, hier einen Handhebel 28, für eine manuelle Betätigung der Schaltwelle 21. Die Schaltwelle 21 weist nockenartige Steuerflächen 24, 25, 26 auf, an denen jeweils eine Stirnseite eines Ventilstößels 14 anliegt. Hierbei dient die Steuerfläche 24 der Betätigung des Fahrt-Ventils 12, die Steuerfläche 25 der Betätigung des Hebe-Ventils 10 und die Steuerfläche 26 der Betätigung des Senk-Ventils 11. Mit Vergrößerung des Abstands der Steuerflächen 24, 25, 26 von der Längsachse 18-18 im Kontaktbereich mit dem Ventilstößel 14 mit einer Verdrehung der Schaltwelle 21 wird unter Vergrößerung der Beaufschlagung der Ventilfeder 17 der Ventilkörper 13 weiter nach außen gedrückt, womit eine Öffnungsbewegung der Ventile 10. 11. 12 herbeigeführt werden kann sowie - in umgekehrter Richtung - eine Schließbewegung, für welche die Ventilfeder 17 den zugeordneten Ventilkörper 13 wieder radial nach innen drückt. Die Verteilung und Ausrichtung der Steuerflächen 24, 25, 26 in Umfangsrichtung der Schaltwelle 21 ist derart gewählt, dass die Ventile 10, 11, 12 für unterschiedliche Drehwinkel der Schaltwelle 21 eine Öffnungsstellung einnehmen. Ein Federfußpunkt einer Torsionsfeder 27 ist an der Schaltwelle 21 angelenkt, während der andere Federfußpunkt der Torsionsfeder 27 an dem Gehäuse 19 angelenkt ist. Über die Torsionsfeder 27 wird eine Gleichgewichtslage der Schaltwelle 21 vorgegeben, aus welcher für einen Hebe- oder Senk-Vorgang die Schaltwelle 21 unter Veränderung der Beaufschlagung der Torsionsfeder 27 durch Einwirken des Benutzers auf das Handbetätigungsorgan 28 manuell verdrehbar ist. Eine Anlenkung der Torsionsfeder 27 an die Schaltwelle 21 oder das Gehäuse 19 erfolgt derart, dass die Torsionsfeder 27 einen Verschiebe-Freiheitsgrad in Richtung der Längsachse 18-18 nicht behindert und eine derartige Verschiebung das Kraftniveau und die Gleichgewichtslage der Torsionsfeder 27 nicht beeinflusst.

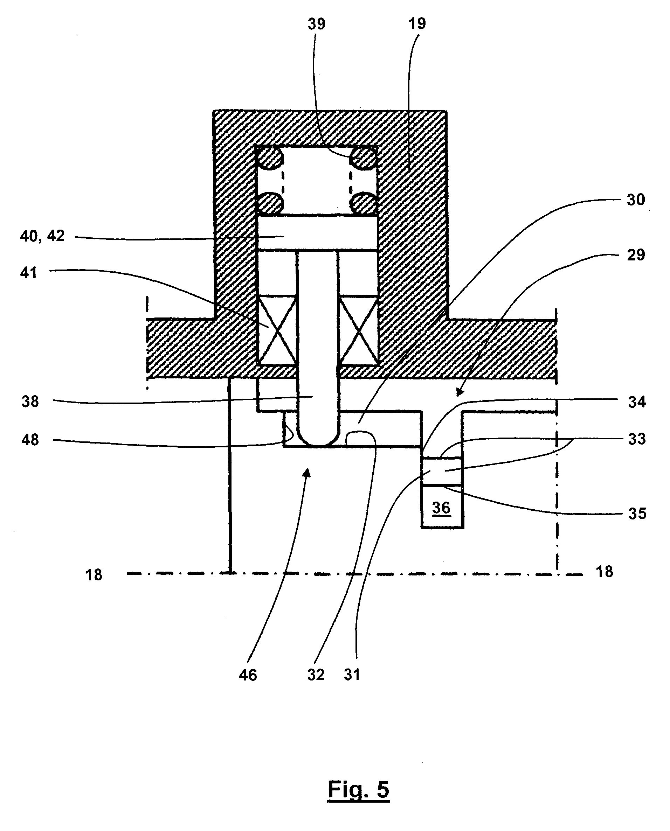

In der Mantelfläche der Schaltwelle 21 ist eine Kulisse 29 vorgesehen. Für das dargestellte Ausführungsbeispiel ist die Kulisse 29 in einer Abwicklung in erster Näherung T-förmig ausgebildet, wobei ein Längsschenkel 30 des T parallel zur Längsachse 18-18 orientiert ist, während sich ein Querschenkel 31 des T in Umfangsrichtung der Schaltwelle 21 erstreckt. Die Schenkel 30, 31 der Kulisse 29 sind nutartig ausgebildet. Im Bereich des Längsschenkels 30 ist ein Boden 32 mit einem größeren Abstand von der Längsachse 18-18 angeordnet als dies für einen Boden 33 im Bereich des Querschenkels 31 der Fall ist. Anders gesagt besitzt die Nut im Bereich des Längsschenkels 30 eine geringere Tiefe als im Bereich des Querschenkels 31. Die Böden 32, 33 gehen über eine Stufe 34 ineinander über. In den Endbereichen des Querschenkels 31 geht der Boden 33 über eine weitere Stufe 35 über zu einem weiteren Boden 36, dessen Abstand von der Längsachse 18-18 geringer ist als der der Böden 32, 33, so dass im Bereich des Bodens 36 die Tiefe der Nut nochmals vergrößert ist (vgl. Fig. 5).

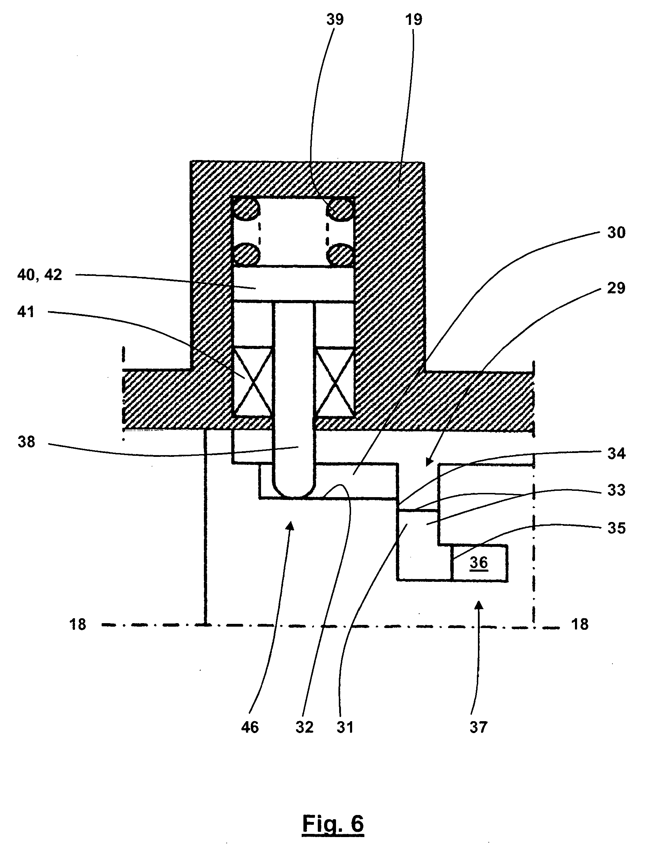

Für eine alternative Ausgestaltung der Kulisse gemäß Fig. 6 bis 8 sind die Endbereiche des Querschenkels 31 der Kulisse 29 mit Fortsätzen 37 ausgebildet, die parallel zur Längsachse 18-18 orientiert sind. In diesem Fall sind die Böden 36 im Bereich der Fortsätze 37 angeordnet. In die Kulisse 29 greift radial nach innen ein Kulissenfinger 38 ein, der radial verschieblich im Gehäuse 19 geführt ist. Der Kulissenfinger 38 wird über eine Feder 39 radial nach innen beaufschlagt, wobei sich ein Federfußpunkt der Feder 39 an einem der Kulisse 29 gegenüberliegenden Endbereich des Kulissenfingers 38, insbesondere einem Federteller 40, abstützt sowie mit dem anderen Federfußpunkt an dem Gehäuse 19 abstützt. Weiterhin ist in dem Gehäuse 19 eine elektromagnetische Betätigungseinrichtung 41 vorgesehen. Für das dargestellte Ausführungsbeispiel umgibt eine Spule der elektromagnetischen Betätigungseinrichtung 41 den Kulissenfinger 38. Die elektromagnetische Betätigungseinrichtung 41 ist an dem Gehäuse abgestützt. Die Betätigungseinrichtung 41 wirkt auf einen Anker 42 ein, der mit dem Kulissenfinger 38 gekoppelt ist. Im dargestellten Ausführungsbeispiel ist der Anker 42 einstückig mit dem Kulissenfinger 38 ausgebildet und bildet gleichzeitig den Federteller 40. Die dem Boden 32, 33, 36 zugewandte Stirnseite des Kulissenfingers 38 ist geeignet für eine gleitende Bewegung über die Böden 32, 33, 36 sowie zur Überwindung der Stufen 34, 35 ausgebildet, beispielsweise abgerundet, wobei hier auch eine besondere Gleitbeschichtung oder ein zusätzliches Gleitelement wie eine Rolle oder Ähnliches vorgesehen sein kann.

Die Betätigungseinrichtung 41 wird über elektrische Leitungen 44 von der Steuereinrichtung 4 beaufschlagt, wobei in unbestromtem Zustand der Betätigungseinrichtung 41 die Betätigungseinrichtung 41 keine Kraft auf Anker 42 und Kulissenfinger 38 ausübt, so dass lediglich die Feder 39 den Kulissenfinger 38 in Richtung der Längsachse 18-18 drückt, während für eine Bestromung der Betätigungseinrichtung 41 durch die Steuereinrichtung 4 der Anker 42 von der Betätigungseinrichtung 41 angezogen oder abgestoßen wird, so dass die Kraft der Betätigungseinrichtung 41 zusätzlich zu der Kraft der Feder 39 wirkt, wodurch die Einpresskraft des Kulissenfingers 38 in die Kulisse 29 vergrößert oder verringert wird. Im Fall der Verringerung der Kraft bei Betätigung der Betätigungseinrichtung 41 wird eine Rastkraft oder Sicherungswirkung der Kulissenführung verringert, so dass eine eingenommene Stellung (leichter) verlassen werden kann. Erfolgt bei elektrischer Betätigung der Betätigungseinrichtung 41 eine Erhöhung der Rast- oder Sicherungskraft, korreliert die Bestromung der Betätigungseinrichtung 41 mit der Sicherung einer eingenommenen Stellung, während in stromlosem Zustand der Betätigungseinrichtung 41 die gesicherte Stellung (leichter) verlassen werden kann.

Eine Druckfeder 45 ist mit einem Federfußpunkt an dem Gehäuse 19 abgestützt, während der andere Federfußpunkt der Druckfeder 45 an der dem Handbetätigungsorgan 28 gegenüberliegenden Stirnseite der Schaltwelle 21 abgestützt ist. Die Druckfeder 45 dient als Reset-to-Ride-Organ, welches eine automatische Überführung der Schaltwelle 21 in die Stellung FAHRT veranlassen kann.

Fig. 1 und 5 bzw. 6 zeigen die Anlage 1 und das Hebe-Senk-Ventil 6 in einer Stellung FAHRT. In dieser Stellung befindet sich die Torsionsfeder 27 in einer Gleichgewichts- oder Mittenlage und die Druckfeder 45 besitzt eine minimale Beaufschlagung, so dass die Schaltwelle 21 maximal nach rechts verschoben ist. Hierbei kann die derart gebildete Endlage der Schaltwelle 21 dadurch vorgegeben sein, dass der Kulissenfinger 38 zur Anlage an einen Absatz 48 der Kulisse 29 in dem dem Querschenkel 31 gegenüberliegenden Endbereich des Längsschenkels 30 kommt (dies ist in Fig. 5 und 6 abweichend dargestellt).

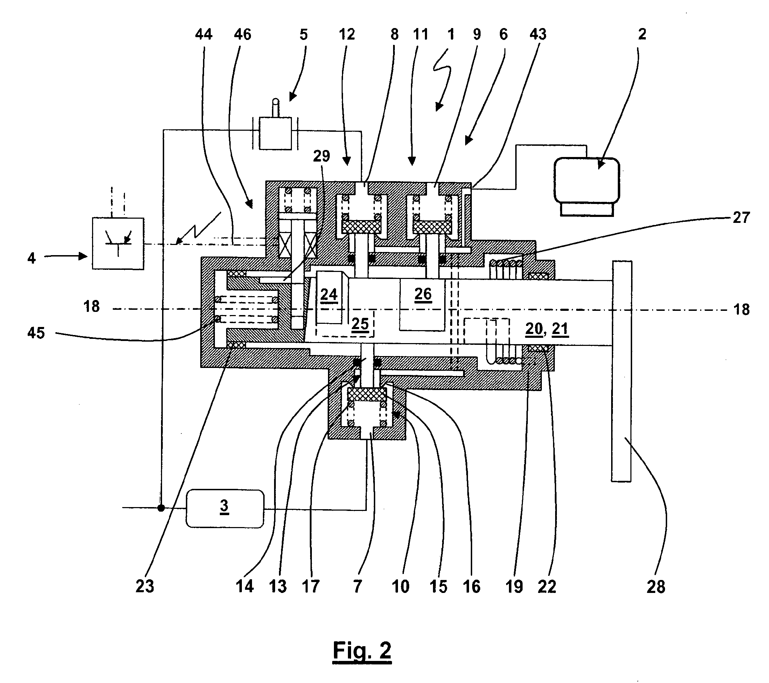

Über eine manuelle Betätigung des Handbetätigungsorgans 28, nämlich die Verursachung einer Verschiebung der Schaltwelle 21 in Richtung der Längsachse 18-18 in Fig. 1 nach links, wird das Hebe-Senk-Ventil 6 aus der Stellung FAHRT gemäß Fig. 1 in die Stellung STOP gemäß Fig. 2 verbracht. In dieser Stellung befindet sich die Torsionsfeder 27 immer noch in einer Gleichgewichts- oder Mittenstellung, während die Druckfeder 45 infolge der axialen Verschiebung zusätzlich beaufschlagt ist. Während der Axialverschiebung gleitet die Stirnseite des Kulissenfingers 38 entlang des Boden 32, überwindet die Stufe 34, woran anschließend infolge der Kraft der Feder 39 der Kulissenfinger 38 weiter in die Kulisse 29 eintaucht, bis die Stirnseite des Kulissenfingers 38 zur Anlage an den Boden 33 kommt. Infolge der Stufe 34 ist auch bei Beendigung der Betätigung des Handbetätigungsorgans 28 die Stellung STOP hinsichtlich einer Rückkehr in die Stellung FAHRT gesichert, da hierzu entgegen der Beaufschlagung durch die Feder 39 der Kulissenfinger 38 die Stufe 34 überwinden müsste, wozu die Federkraft 45 nicht ausreichend ist. Allerdings kann durch zusätzliche auf das Handbetätigungsorgan 28 aufgebrachte Betätigungskräfte manuell das Hebe-Senk-Ventil 6 in die Stellung FAHRT aus der Stellung STOP überführt werden.

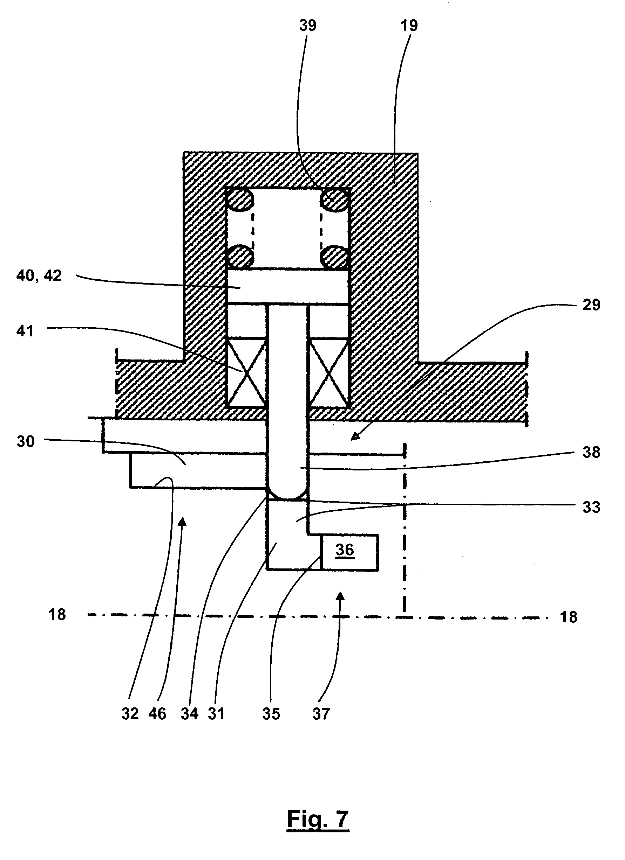

Fig. 7 zeigt im Detail die Kulissenführung 46 in der Stellung STOP. Mit Veränderung der Beaufschlagung der Betätigungseinrichtung 41 derart, dass die Einpresskraft des Kulissenfingers 38 in die Kulisse 29 verringert wird, kann ebenfalls über die Feder 45 eine automatische Rückführung aus der Stellung STOP in die Stellung FAHRT erfolgen. Somit kann über die Steuereinrichtung 4 eine Reset-to-Ride-Funktion realisiert werden, da bei dem Erkennen eines bevorstehenden oder einsetzenden Fahrzustands die Steuereinrichtung 4 über die Leitungen 44 die Betätigungseinrichtung 41 geeignet bestromt zur Ermöglichung einer automatischen Überführung der Schaltwelle 21 aus der Stellung STOP in die Stellung FAHRT.

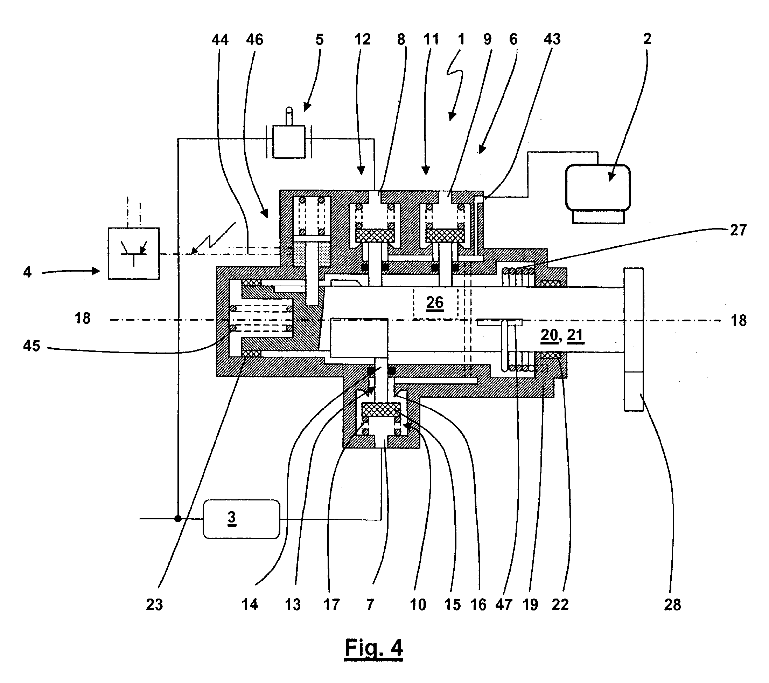

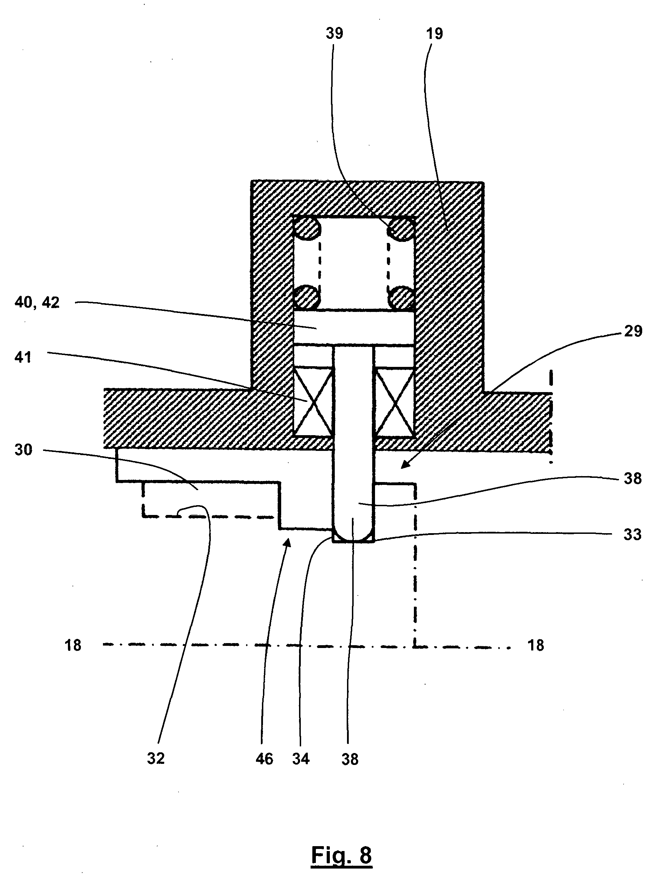

Aus der Stellung STOP gemäß Fig. 2 und 7 kann das Hebe-Senk-Ventil 6 in die Stellungen HEBEN und SENKEN verbracht werden. Dies erfolgt durch Verschwenkung der Schaltwelle 21 über eine manuelle Betätigung des Handbetätigungsorgans 28, womit eine Veränderung der Beaufschlagung der Torsionsfeder 27 aus der Gleichgewichts- oder Mittenlage einhergeht. In Fig. 4 ist beispielhaft die Verdrehung der Schaltwelle 21 in Richtung der Stellung HEBEN dargestellt, wobei sich eine Überführung des Hebe-Senk-Ventils 6 in die Stellung SENKEN in entsprechender Weise unter Umkehrung der Drehrichtung der Schaltwelle 21 ergibt. Während der Überführung des Hebe-Senk-Ventils 6 aus der Stellung STOP gemäß Fig. 2 und 7 in die Stellung HEBEN gemäß Fig. 4 und 8 gleitet der Kulissenfinger 38 entlang des Querschenkels der Kulisse 29 und entlang des Bodens 33. Mit Erreichen der Stellung HEBEN überwindet der Kulissenfinger 38 die Stufe 35, tritt infolge der Beaufschlagung durch die Feder 39 weiter in die Kulisse 29 ein und kommt stirnseitig zur Anlage an den Boden 36. Das Hebe-Senk-Ventil nimmt damit eine gesicherte Stellung ein, da für eine Rückkehr aus der Stellung HEBEN in die Stellung STOP der Kulissenfinger 38 die Stufe 35 überwinden müsste. Eine Auslegung der Torsionsfeder, der Stufe 35 und der Stirnseite des Kulissenfingers 38 erfolgt derart, dass die Rückstellkräfte der Torsionsfeder 27 für eine derartige Rückstellung in die Stellung STOP nicht ausreicht. Erst wenn die Bestromung der Betätigungseinrichtung 41 durch die Steuereinrichtung 4 derart verändert wird, dass sich eine verringerte Anpresskraft des Kulissenfingers 38 an den Boden 36 ergibt oder der Kulissenfinger 38 angehoben wird, kehrt das Hebe-Senk-Ventil 6, veranlasst durch die Torsionsfeder 27, wieder in die Gleichgewichtslage der Torsionsfeder 27, nämlich die Stellung STOP, zurück. Wie in Fig. 5 dargestellt, kann sich die gesicherte Stellung STOP mit dem Boden 36 in den außen liegenden Endbereichen des Querschenkels 31 befinden. Für die abgewandete Ausführungsform gemäß Fig. 6 bis 8 befindet sich die gesicherte Stellung im Bereich des Fortsatzes 37, so dass über die manuelle Betätigung des Handbetätigungsorgans 28 neben der erläuterten Verdrehung um die Längsachse 18-18 auch eine Axialverschiebung der Schaltwelle 21 verursacht werden muss.

Neben einer gezielten Rückführung des Hebe-Senk-Ventils 6 aus einer Stellung HEBEN oder SENKEN in die Stellung STOP einerseits sowie aus der Stellung STOP in die Stellung FAHRT andererseits durch geeignete Bestromung der Betätigungseinrichtung 41 ist es ebenfalls möglich, dass eine unmittelbare Überführung des Hebe-Senk-Ventils aus der Stellung HEBEN oder SENKEN in die Stellung FAHRT erfolgt, was mit gleicher Höhe der Bestromung der Betätigungseinrichtung 41 für die Bewegung entlang der Kulisse 29 erfolgen kann oder für unterschiedliche Bestromungen in den einzelnen Teilwegen.

Das Hebe-Senk-Ventil 6 kann einen Sensor aufweisen, über welchen eine aktuelle axiale Position der Schaltwelle 21 und/oder ein Drehwinkel der Schaltwelle 21 unmittelbar oder mittelbar erfasst werden kann, wobei beispielsweise auch die Position des Kulissenfingers 38, eine Stellung eines der Ventile 10, 11, 12, eine Beaufschlagung einer Feder 27, 45 oder ein Druckzustand zur Ableitung der Stellung und Bewegung der Schaltwelle eingesetzt werden kann.

Wie in Fig. 4 ersichtlich ist, ist ein Federfußpunkt der Torsionsfeder 27 drehfest, aber längsverschieblich in Richtung der Längsachse 18-18 an der Schaltwelle 21 angelenkt, hier in einer Längsnut 47.

### BEZUGSZEICHENLISTE

- 1: Anlage
- 2: Luftfederbalg
- 3: Vorratsbehälter
- 4: Steuereinrichtung
- 5: Niveauregelventil
- 6: Hebe-Senk-Ventil
- 7: Versorgungs-Anschluss
- 8: Niveauregel-Anschluss
- 9: Entlüftungs-Anschluss
- 10: Hebe-Ventil
- 11: Senk-Ventil
- 12: Fahrt-Ventil
- 13: Ventilkörper
- 14: Ventilstößel
- 15: Verschlusskörper
- 16: Ventilsitz
- 17: Ventilfeder
- 18: Längsachse
- 19: Gehäuse
- 20: Betätigungsorgan
- 21: Schaltwelle
- 22: Lagereinheit
- 23: Lagereinheit
- 24: Steuerfläche
- 25: Steuerfläche
- 26: Steuerfläche
- 27: Torsionsfeder
- 28: Handbetätigungsorgan
- 29: Kulisse
- 30: Längsschenkel
- 31: Querschenkel
- 32: Boden
- 33: Boden
- 34: Stufe
- 35: Stufe
- 36: Boden
- 37: Fortsatz
- 38: Kulissenfinger
- 39: Feder
- 40: Federteller
- 41: Betätigungseinrichtung
- 42: Anker
- 43: Luftfederbalg-Anschluss
- 44: Leitung
- 45: Druckfeder
- 46: Kulissenführung
- 47: Längsnut
- 48: Absatz

## Patentansprüche

1. Anlage (1) zum Heben und Senken eines Fahrzeugsaufbaus eines luftgefederten Kraftfahrzeugs mit
a) einem manuell betätigbaren Hebe-Senk-Ventil (6) mit einem Schaltorgan (20; Schaltwelle 21), welches in Stellungen FAHRT, STOP, HEBEN und SENKEN bringbar ist,
b) einem Kulissenfinger (38), der in eine Kulisse (29) des Schaltorgans (20; Schaltwelle 21) eingreift, wodurch eine Führung der Bewegung des Schaltorgans (20; Schaltwelle 21) zumindest auf einem Teilweg zwischen den Stellungen FAHRT, STOP, HEBEN und SENKEN erfolgt,
c) wobei der Boden (32, 33, 36) der Kulisse (29) variierende Abstände von der Längsachse (18-18) des Schaltorgans (20; Schaltwelle 21) besitzt, wodurch eine Rast-, Verriegelungs- oder Sicherungskraft für das Schaltorgan (20; Schaltwelle 21) in mindestens einer der Stellungen FAHRT, STOP, HEBEN und SENKEN herbeiführbar ist, und
d) über eine Betätigungseinrichtung (41) eine Veränderung der Anpresskraft des Kulissenfingers (38) an den Boden (32, 33, 36) der Kulisse (29) und/oder eine Verschiebung des Kulissenfingers (38) in Richtung des Bodens (32, 33, 36) und/oder von diesem weg herbeiführbar ist, wodurch Rast-, Verriegelungs- oder Sicherungskräfte für das Schaltorgan (20; Schaltwelle 21) veränderbar sind.

2. Anlage (1) nach Anspruch 1, **dadurch gekennzeichnet, dass** die Betätigungseinrichtung (41) druckluftgesteuert ist.

3. Anlage (1) nach Anspruch 1, **dadurch gekennzeichnet, dass** die Betätigungseinrichtung (41) als elektromagnetische Betätigungseinrichtung ausgebildet ist.

4. Anlage (1) nach Anspruch 3, **dadurch gekennzeichnet, dass** die elektromagnetische Betätigungseinrichtung (41) auf einen Anker (42) einwirkt, der mit dem Kulissenfinger (38) gekoppelt ist.

5. Anlage (1) nach einem der vorhergehenden Ansprüche, **dadurch gekennzeichnet, dass** in der Stellung HEBEN und/oder SENKEN durch variierende Abstände des Bodens (32, 33, 36) der Kulisse (29) von der Längsachse (18-18) des Schaltorgans (20; Schaltwelle 21) eine Rast-, Verriegelungs- oder Sicherungskraft für das Schaltorgan (20; Schaltwelle 21) herbeiführbar ist.

6. Anlage (1) nach Anspruch 5, **dadurch gekennzeichnet, dass** auch in der Stellung STOP durch variierende Abstände des Bodens (32, 33, 36) der Kulisse (29) von der Längsachse (18-18) des Schaltorgans (20; Schaltwelle 21) eine Rast-, Verriegelungs- oder Sicherungskraft für das Schaltorgan (20; Schaltwelle 21) herbeiführbar ist.

7. Anlage (1) nach einem der der vorhergehenden Ansprüche, **dadurch gekennzeichnet, dass** die Kulisse (29) in abgewickelter Darstellung einen T-förmig Bereich aufweist, wobei
a) die Stellung FAHRT in dem freien Endbereich eines Längsschenkels (30) des T,
b) die Stellung STOP im Verbindungsbereich des Längsschenkels (30) mit dem Querschenkel (31),
c) die Stellung HEBEN in einem Endbereich des Querschenkels (31) des T und
d) die Stellung SENKEN in dem anderen Endbereich des Querschenkels (31) des T angeordnet ist.

8. Anlage (1) nach einem der vorhergehenden Ansprüche, **dadurch gekennzeichnet, dass** eine Reset-to-Ride-Organ (Feder45) vorgesehen ist, über welches eine automatische Überführung des Hebe-Senk-Ventils (6) aus der Stellung STOP in die Stellung FAHRT herbeiführbar ist.

9. Anlage (1) nach Anspruch 8, **dadurch gekennzeichnet, dass** eine Steuereinrichtung (4) vorgesehen ist, über die das Reset-to-Ride-Organ für eine Überführung des Hebe-Senk-Ventils (6) aus der Stellung STOP in die Stellung FAHRT aktivierbar ist, wobei die Aktivierung des Reset-to-Ride-Organs für eine Überführung des Hebe-Senk-Ventils aus der Stellung STOP in die Stellung FAHRT gekoppelt ist mit einer Aufhebung einer Sicherung des Schaltorgans (20; Schaltwelle 21) in der Stellung STOP.

10. Anlage (1) nach einem der vorhergehenden Ansprüche, **dadurch gekennzeichnet, dass** eine Steuereinrichtung (4) vorgesehen ist, welche in Abhängigkeit von einem Zustand mindestens eines Luftfederbalges (2) eine automatische Aufhebung der Sicherung der Stellung HEBEN und/oder der Stellung SENKEN herbeiführt.

11. Anlage (1) nach einem der vorhergehenden Ansprüche, **dadurch gekennzeichnet, dass** eine Steuereinrichtung (4) vorgesehen ist, welche in Abhängigkeit von einem Druck in einem Vorratsbehälter (3) des Kraftfahrzeugs eine automatische Aufhebung der Sicherung der Stellung HEBEN und/oder der Stellung SENKEN herbeiführt.

12. Anlage (1) nach einem der vorhergehenden Ansprüche, **dadurch gekennzeichnet, dass** eine Steuereinrichtung (4) vorgesehen ist, welche in Abhängigkeit von einem Beladungszustand des Kraftfahrzeugs eine automatische Aufhebung der Sicherung der Stellung HEBEN und/oder der Stellung SENKEN herbeiführt.

13. Anlage (1) nach einem der vorhergehenden Ansprüche, **dadurch gekennzeichnet, dass** eine Steuereinrichtung (4) vorgesehen ist, welche in Abhängigkeit von einer Fahrbeginnerkennungseinrichtung eine automatische Aufhebung der Sicherung der Stellung HEBEN, SENKEN und/oder STOP herbeiführt.

## Claims

1. A device (1) for lifting and lowering a body of an air-sprung motorised vehicle with
a) a manually operable valve (6) for lifting and lowering with a switching means (20; switching shaft 21), which can be brought into the positions DRIVE, STOP, LIFTING and LOWERING,
b) a finger (38) which engages with a slotted link (29) of the switching means (20; switching shaft 21), thereby guiding the movement of the switching means (20; switching shaft 21) at least through a part of the path between the positions DRIVE, STOP, LIFTING and LOWERING,
c) wherein the bottom (32, 33, 36) of the slotted link (29) has varying distances from the longitudinal axis (18-18) of the switching means (20; switching shaft 21), enabling the generation of a latching, locking or securing force for the switching means (20; switching shaft 21) in at least one of the positions DRIVE, STOP, LIFTING and LOWERING, and
d) by an operating device (41) it is possible to cause a change of the contact force of the finger (38) with the bottom (32, 33, 36) of the slotted link (29) and/or a displacement of the finger (38) in the direction of the bottom (32, 33, 36) and/or away from the bottom (32, 33, 36), in which way latching, locking or securing forces for the switching means (20; switching shaft 21) can be varied.

2. The device (1) of claim 1, **characterised in that** the operating device (41) is controlled by pressurized air.

3. The device (1) of claim 1, **characterised in that** the operating device (41) is built by an electromagnetic operating device.

4. The device (1) of claim 3, **characterised in that** the electromagnetic operating device (41) acts upon a solenoid plunger (42) which is coupled to the finger (38).

5. The device (1) of one of the preceding claims, **characterised in that** in the position LIFTING and/or LOWERING it is possible to cause a latching, locking or securing force for the switching means (20; switching shaft 21) by varying distances of the bottom (32, 33, 36) of the slotted link (29) from the longitudinal axis (18-18) of the switching means (20; switching shaft 21).

6. The device (1) of claim 5, **characterised in that** also in the position STOP it ist possible to cause a latching, locking or securing force for the switching means (20; switching shaft 21) by varying distances of the bottom (32, 33, 36) of the slotted link (29) from the longitudinal axis (18-18) of the switching means (20; switching shaft 21).

7. The device (1) of one of the preceding claims, **characterised in that** the slotted link (29) in its flat projection has a T-shaped region, wherein
a) the position DRIVE is located in the free end region of a lengthwise leg (30) of the T,
b) the position STOP is located in the connecting region of the lengthwise leg (30) and the crosswise leg (31),
c) the position LIFTING is located in one end region of the crosswise leg (31) of the T and
d) the position LOWERING is located in the other end region of the crosswise leg (31) of the T.

8. The device (1) of one of the preceding claims, **characterised in that** a Reset-to-Ride means (spring 45) is provided which enables the automatic transfer of the valve for lifting and lowering (6) from the position STOP to the position DRIVE.

9. The device (1) of claim 8, **characterised in that** a control device (4) is provided by which it is possible to activate the Reset-to-Ride means for a transfer of the valve for lifting and lowering (6) from the position STOP to the position DRIVE, wherein the activation of the Reset-to-Ride means for a transfer of the valve for lifting and lowering (6) from the position STOP to the position DRIVE is coupled with a release of the securing of the switching means (20; switching shaft 21) in the position STOP.

10. The device (1) of one of the preceding claims, **characterised in that** a control device (4) is provided which causes an automatic release of the securing of the position LIFTING and/or the position LOWERING in dependance on the state of at least one air suspension bellow (2).

11. The device (1) of one of the preceding claims, **characterised in that** a control device (4) is provided which causes an automatic release of the securing of the position LIFTING and/or the position LOWERING in dependance on the pressure in a reservoir (3) of the motorised vehicle.

12. The device (1) of one of the preceding claims, **characterised in that** a control device (4) is provided which causes an automatic release of the securing of the position LIFTING and/or the position LOWERING in dependance on a load state of the motorised vehicle.

13. The device (1) of one of the preceding claims, **characterised in that** a control device (4) is provided which causes an automatic release of the securing of the position LIFTING, the position LOWERING and/or the position STOP in dependance on a device for the detection of start of drive.

## Revendications

1. Installation (1) de levage et d'abaissement d'une carrosserie d'un véhicule automobile à suspension pneumatique, comportant
a) une vanne de levage et d'abaissement (6) actionnable manuellement et munie d'un organe de commande (20 ; arbre de commande 21), qui peut être amené dans les positions MARCHE, STOP, LEVAGE et ABAISSEMENT,
b) un doigt guidé par coulisse (38) qui s'engage dans une coulisse (29) de l'organe de commande (20 ; arbre de commande 21), ce qui produit un guidage du mouvement de l'organe de commande (20 ; arbre de commande 21) au moins sur un trajet partiel entre les positions MARCHE, STOP, LEVAGE et ABAISSEMENT,
c) le fond (32, 33, 36) de ladite coulisse (29) présentant des distances variables par rapport à l'axe longitudinal (18-18) de l'organe de commande (20 ; arbre de commande 21), ce qui produit une force de blocage, de verrouillage ou de sécurisation pour l'organe de commande (20 ; arbre de commande 21) dans au moins une des positions MARCHE, STOP, LEVAGE et ABAISSEMENT, et
d) une variation de la force de pression du doigt guidé par coulisse (38) sur le fond (32, 33, 36) de la coulisse (29) et/ou un déplacement dudit doigt (38) en direction du fond (32, 33, 36) et/ou en s'écartant de celui-ci pouvant être générés via un dispositif d'actionnement (41), moyennant quoi les forces de blocage, de verrouillage ou de sécurisation pour l'organe de commande (20 ; arbre de commande 21) peuvent être modifiées.

2. Installation (1) selon la revendication 1, **caractérisée en ce que** le dispositif d'actionnement (41) est commandé par air comprimé.

3. Installation (1) selon la revendication 1, **caractérisée en ce que** le dispositif d'actionnement (41) est réalisé sous la forme d'un dispositif d'actionnement électromagnétique.

4. Installation (1) selon la revendication 3, **caractérisée en ce que** le dispositif d'actionnement (41) électromagnétique agit sur un induit (42) qui est couplé au doigt guidé par coulisse (38).

5. Installation (1) selon l'une quelconque des revendications précédentes, **caractérisée en ce que** dans la position LEVAGE et/ou ABAISSEMENT, il est possible de produire une force de blocage, de verrouillage ou de sécurisation pour l'organe de commande (20 ; arbre de commande 21) sous l'effet de la variation des distances entre le fond (32, 33, 36) de la coulisse (29) et l'axe longitudinal (18-18) de l'organe de commande (20 ; arbre de commande 21).

6. Installation (1) selon la revendication 5, **caractérisée en ce que** dans la position STOP également, il est possible de produire une force de blocage, de verrouillage ou de sécurisation pour l'organe de commande (20 ; arbre de commande 21) sous l'effet de la variation des distances entre le fond (32, 33, 36) de la coulisse (29) et l'axe longitudinal (18-18) de l'organe de commande (20 ; arbre de commande 21).

7. Installation (1) selon l'une quelconque des revendications précédentes, **caractérisée en ce que** la coulisse (29) dans une position déployée comporte une zone en forme de T,
a) la position MARCHE étant située dans la zone d'extrémité libre d'une branche longitudinale (30) du T,
b) la position STOP étant située dans la zone de liaison de la branche longitudinale (30) avec la branche transversale (31),
c) la position LEVAGE étant située dans une zone d'extrémité de la branche transversale (31) du T, et
d) la position ABAISSEMENT étant située dans une autre zone d'extrémité de la branche transversale (31) du T.

8. Installation (1) selon l'une quelconque des revendications précédentes, **caractérisée en ce qu'**il est prévu un organe reset-to-ride (ressort 45), par lequel la vanne de levage et d'abaissement (6) est transposée automatiquement hors de la position STOP dans la position MARCHE.

9. Installation (1) selon la revendication 8, **caractérisée en ce qu'**il est prévu un dispositif de commande (4), par lequel l'organe reset-to-ride peut être activé pour transposer la vanne de levage et d'abaissement (6) hors de la position STOP dans la position MARCHE, l'activation de l'organe reset-to-ride, qui permet de transposer la vanne de levage et d'abaissement hors de la position STOP dans la position MARCHE, étant couplée à une annulation d'une sécurisation de l'organe de commande (20 ; arbre de commande 21) dans la position STOP.

10. Installation (1) selon l'une quelconque des revendications précédentes, **caractérisée en ce qu'**il est prévu un dispositif de commande (4) qui, en fonction de l'état d'au moins un soufflet (2) de suspension pneumatique, provoque une annulation automatique de la sécurisation de la position LEVAGE et/ou de la position ABAISSEMENT.

11. Installation (1) selon l'une quelconque des revendications précédentes, **caractérisée en ce qu'**il est prévu un dispositif de commande (4) qui, en fonction d'une pression dans le réservoir (3) du véhicule automobile, provoque une annulation automatique de la sécurisation de la position LEVAGE et/ou de la position ABAISSEMENT.

12. Installation (1) selon l'une quelconque des revendications précédentes, **caractérisée en ce qu'**il est prévu un dispositif de commande (4) qui, en fonction d'un état de charge du véhicule automobile, provoque une annulation automatique de la sécurisation de la position LEVAGE et/ou de la position ABAISSEMENT.

13. Installation (1) selon l'une quelconque des revendications précédentes, **caractérisée en ce qu'**il est prévu un dispositif de commande (4) qui, en fonction d'un dispositif de détection de démarrage, provoque une annulation automatique de la sécurisation de la position LEVAGE, ABAISSEMENT et/ou STOP.
